(19)

**Europäisches Patentamt**

**European Patent Office**

**Office européen des brevets**

(11) **EP 4 449 809 B1**

(12) **EUROPEAN PATENT SPECIFICATION**

(45) Date of publication and mention
of the grant of the patent:
**28.01.2026 Bulletin 2026/05**

(21) Application number: **22835433.8**

(22) Date of filing: **15.12.2022**

(51) International Patent Classification (IPC):
*H04W 72/512* (2023.01)     *H04W 84/12* (2009.01)

(52) Cooperative Patent Classification (CPC):
**H04W 72/512;** H04W 84/12

(86) International application number:
**PCT/EP2022/086148**

(87) International publication number:
**WO 2023/111177 (22.06.2023 Gazette 2023/25)**

(54) **COMMUNICATION DEVICES AND METHODS**

KOMMUNIKATIONSVORRICHTUNGEN UND -VERFAHREN

DISPOSITIFS ET PROCÉDÉS DE COMMUNICATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **16.12.2021 EP 21215213**

(43) Date of publication of application:
**23.10.2024 Bulletin 2024/43**

(73) Proprietors:
• **Sony Group Corporation
Tokyo 108-0075 (JP)**
• **Sony Europe B.V.
Weybridge, Surrey KT13 0XW (GB)**
Designated Contracting States:
**AL**

(72) Inventors:
• **VERENZUELA, Daniel
70327 Stuttgart (DE)**
• **HANDTE, Thomas
70327 Stuttgart (DE)**
• **CIOCHINA-KAR, Dana
70327 Stuttgart (DE)**
• **TANAKA, Ken
70327 Stuttgart (DE)**

(74) Representative: **Witte, Weller & Partner
Patentanwälte mbB
Postfach 10 54 62
70047 Stuttgart (DE)**

(56) References cited:
**WO-A1-2021/155954**

• **EVGENY KHOROV (IITP RAS): "Performance
evaluation of Real Time Communication over Wi-
Fi", vol. 802.11 RTA, no. 4, 12 March 2019
(2019-03-12), pages 1 - 11, XP068147614,
Retrieved from the Internet <URL:https://mentor.
ieee.org/802.11/dcn/18/
11-18-1947-04-0rta-performance-evaluation-o
f-real-time-communication-over-wi-fi.pptx>
[retrieved on 20190312]**

EP 4 449 809 B1

## Description

BACKGROUND

FIELD OF THE DISCLOSURE

The present disclosure relates to communication devices and methods, in particular for use in WLAN where a second communication device (e.g. an access point (AP)) is able to communicate with multiple other communication devices (e.g. stations (STAs)).

DESCRIPTION OF RELATED ART

Many emerging applications like augmented reality (AR), virtual reality (VR), remote surgery, smart manufacturing, etc. require strict low latency communications. WLAN networks operate under unlicensed spectrum where channel access cannot be guaranteed or predicted due to interfering devices. In WLAN, if a device wants to send data through the wireless medium, it needs to perform listen before talk. If another transmission is detected, a device needs to set a random backoff counter and wait until the transmission ended to attempt another channel access after said counter is over. In addition, a virtual carrier sense mechanism is implemented in WLAN, by setting a Network Allocation Vector (NAV) time counter to prevent access during ongoing transmissions. If a device detects a physical (PHY) protocol data unit (PPDU) being transmitted by another device, it sets its NAV counter for the duration of the ongoing frame exchange and it is not allowed to access the channel until the current transmission opportunity (TXOP) ends. This means that there may be long waiting time periods between the time a low latency station (LL_STA) receives a packet from higher layers and the time it can access the channel.
WO 2021/155954 A1 discloses a method in a wireless device of transmitting data on a first channel in unlicensed spectrum. The method comprises determining that a transmitter is transmitting a first signal on the first channel in unlicensed spectrum, transmitting a second signal to cause the transmitter to cease transmitting the signal, and transmitting the data on the first channel in unlicensed spectrum.
Further prior art can be found in EVGENY KHOROV (IITP RAS): "Performance evaluation of Real Time Communication over Wi-Fi", IEEE DRAFT; 11-18-1947-04-0RTA-PERFORMANCE-EVALUATION OF-REAL-TIME-COMMUNICATION-OVER-WI-FI, IEEE-SA MENTOR, PISCATAWAY, NJ USA, vol. 802.11 RTA, no. 412 March 2019 (2019-03-12), pages 1-11, XP068147614, Retrieved from the Internet: URL:https://mentor.ieee.org/802.11/dcn/18/ 11-18-1947-04-Orta-performance-evaluationof-real-time-communication-over-wi-fi.pptx.
The "background" description provided herein is for the purpose of generally presenting the context of the disclosure. Work of the presently named inventor(s), to the extent it is described in this background section, as well as aspects of the description which may not otherwise qualify as prior art at the time of filing, are neither expressly nor impliedly admitted as prior art against the present disclosure.

SUMMARY

It is an object to reduce channel access delay in WLAN. It is a further object to provide communication devices and methods enabling such a reduction, a corresponding computer program and a non-transitory computer-readable recording medium for implementing the communication methods.
According to an aspect there is provided a first communication device configured to communicate with a second communication device, the first communication device comprising circuitry configured to:

- receive a low latency, LL, indication from the second and/or third communication device, which indicates to the first communication device that transmission of a second LL information by the first communication device is allowed; and
- transmit second LL information to the second communication device during and within the bandwidth of an ongoing transmission of a data unit from the third communication device to the second communication device, wherein the second LL information indicates to the second communication device that the first communication device has LL data to transmit to the second communication device.

According to a further aspect there is provided a second communication device configured to communicate with a first communication device and a third communication device, the second communication device comprising circuitry configured to:

- transmit a low latency, LL, indication, which indicates to the first communication device that transmission of a second LL information by the first communication device is allowed during and within the bandwidth of an ongoing transmission of a data unit from the third communication device to the second communication device; and
- receive second LL information from the first communication device during and within the bandwidth of an ongoing transmission of a data unit from the third communication device to the second communication device, wherein the second LL information indicates the second communication device that the first communication device has LL data to transmit to the second communication device.

According to a further aspect there is provided a third communication device configured to communicate with a second communication device, the third communication device comprising circuitry configured to:

- receive an instruction from the second communication device to transmit a low latency, LL, indication, which indicates to a first communication device that transmission of a second LL information by the first communication device is allowed; and
- transmit the LL indication.

According to still further aspects a computer program comprising program means for causing a computer to carry out the steps of the method disclosed herein, when said computer program is carried out on a computer, as well as a non-transitory computer-readable recording medium that stores therein a computer program product, which, when executed by a processor, causes the method disclosed herein to be performed are provided.

Embodiments are defined in the dependent claims. It shall be understood that the disclosed communication methods, the disclosed computer program and the disclosed computer-readable recording medium have similar and/or identical further embodiments as the claimed communication devices and as defined in the dependent claims and/or disclosed herein.

One of the aspects of the disclosure is to create an event indication, e.g. an event indication frame, that can be sent by a STA (also called "first communication device" herein) in the same wireless medium during an ongoing data unit (e.g. PPDU) transmission between other two STAs (also called "second communication device" and "third communication device" herein). In this way only a controlled amount of interference is created that does not disrupt the reception and decoding of the ongoing data unit transmission and that enables the receiving STA to additionally detect the event indication and receive an important notification.

An embodiment of the present disclosure is directed to low latency third party preemption and enables low latency (LL) devices to send a low latency indication (also called "even indication"), e.g. a LL indication frame (LL_IF), that intentionally overlaps with an ongoing PPDU to indicate the presence of LL traffic while not disrupting the reception of the ongoing PPDU transmission. Further, it provides a controlled channel access request and enables STAs to send a channel access indication, e.g. a channel access frame, intentionally overlapping with an ongoing data unit transmission to indicate a channel access request to the AP while not disrupting the reception of the ongoing data unit transmission.

The foregoing paragraphs have been provided by way of general introduction, and are not intended to limit the scope of the following claims. The described embodiments, together with further advantages, will be best understood by reference to the following detailed description taken in conjunction with the accompanying drawings.

BRIEF DESCRIPTION OF THE DRAWING

A more complete appreciation of the disclosure and many of the attendant advantages thereof will be readily obtained as the same becomes better understood by reference to the following detailed description when considered in connection with the accompanying drawings, wherein:

Fig. 1      shows a diagram illustrating a standard channel access operation;

Fig. 2      shows a diagram illustrating the general operation according to an embodiment of the present disclosure;

Fig. 3      shows a diagram of an embodiment of the operation in case the first and third communication devices are not in range;

Fig. 4      shows a diagram of an embodiment of the operation in case the first and third communication devices are in range;

Fig. 5      shows a diagram of power constraints used for setting of transmission power;

Fig. 6      shows a diagram of a first embodiment of transmission power selection;

Fig. 7      shows a diagram of a second embodiment of transmission power selection;

Fig. 8      shows a schematic diagram of an embodiment of a receiver (second communication device) according to the present disclosure;

Fig. 9      shows a flow chart illustrating the general operation of the first communication device to send second LL information;

Fig. 10      shows a schematic diagram of an embodiment of circuitry of the first communication device for constructing the second LL information;

Fig. 11      shows a diagram illustrating an example of generation of a sequence representing the second LL information;

Fig. 12      shows a diagram illustrating sparse tone mapping of the second LL information.

Fig. 13      shows a diagram illustrating contiguous tone mapping of the second LL information.

Fig. 14    shows a diagram illustrating resource unit reservation and/or indication;

Fig. 15    shows a schematic diagram of an embodiment of the third communication device using long training field (LTF-) based generation of the second LL information;

Fig. 16    shows a schematic diagram of an embodiment of the first communication device using LTF-based generation of the second LL information;

Fig. 17    shows a diagram illustrating an example of the tone mapping when using LTF-based generation of the second LL information;

Fig. 18    shows a flow chart of an embodiment of a first communication method according to the present disclosure;

Fig. 19    shows a flow chart of an embodiment of a second communication method according to the present disclosure; and

Fig. 20    shows a flow chart of an embodiment of a third communication method according to the present disclosure.

DETAILED DESCRIPTION OF THE EMBODIMENTS

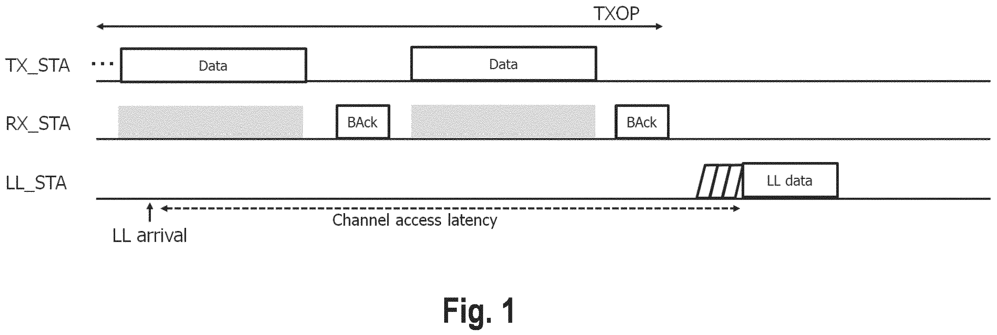

Referring now to the drawings, wherein like reference numerals designate identical or corresponding parts throughout the several views, Fig. 1 shows a diagram illustrating a standard channel access operation. A LL_STA ("first communication device") that is not part of an ongoing frame exchange between a transmitter (TX_STA; "third communication device") and a receiver (RX_STA or AP; "second communication device") needs to indicate an event (e.g. "LL arrival" indicating the arrival of a LL packet (generally "LL data") from higher layers) to RX_STA. However, the LL_STA needs to wait until the end of the current transmit opportunity (TXOP) to be able to contend for channel access.

In the context of the present disclosure the term "LL data" shall be understood broadly as high priority data that either needs to be transmitted urgently and/or has very strict latency requirements (e.g., very small end-to-end delay, jitter). Examples of general LL data may be:

- messages that need to be delivered as soon as possible, such as alert messages transmitted by authorities during a crisis situation or destress messages from people in dangerous situations (e.g., snow avalanche, fire hazards, vehicle accidents) transmitted to first responders; and
- messages that have strict latency constraints and need to be delivered within a time limit, such as video stream and control instructions (e.g., in smart manufacturing, remote surgery, AR/VR applications) that need to arrive within specific time windows to guarantee a correct response action to real-time events, or real-time data processing (e.g., vehicle traffic information, environment information in industrial processes) that needs data collected from sensors to be delivered at a central processing using within specific time windows for processing and take relevant actions.

Hence, LL data may also be referred to as high priority data, and LL information may also be referred to as high priority information.

In case of conventional preemption, the transmitter of the ongoing data unit (e.g. PPDU) is also the one needing to transmit a LL packet which is not the case that is considered in the present disclosure. An alternative way to utilize preemption mechanisms is to assume that the transmitter is capable of simultaneous transmission and reception in multiple links, and therefore it could receive a LL indication in another link. However, this requires advanced circuitry at least at the AP and/or LL_STA. In addition, the LL_STA would need to access the channel in another link to send the LL indication, which may also be occupied. It shall be assured herein that the TX_STA and LL_STA are non-AP STA associated with the RX_STA which is an AP STA. The devices communicate in the same frequency channel, thus, simultaneous transmissions from TX_STA and LL_STA overlap at the AP.

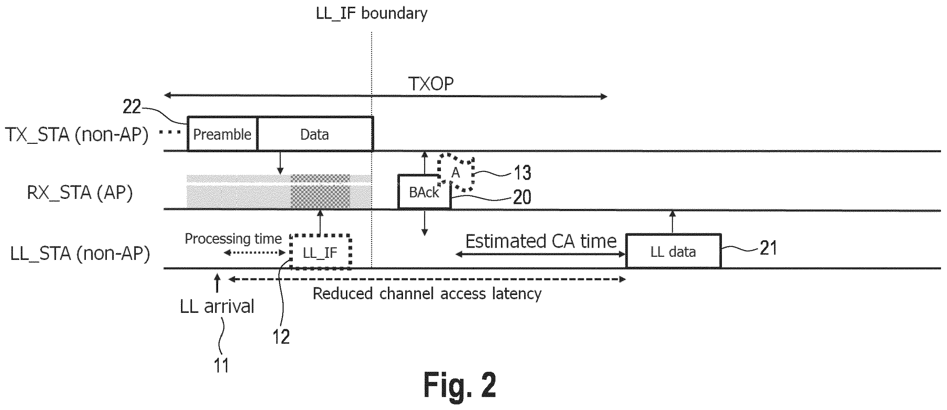

Fig. 2 shows a diagram illustrating the general operation according to an embodiment of the present disclosure. It comprises an overlapped event indication where LL_STA sends an overlapped packet, denoted as LL_IF 12 (i.e., low latency indication frame; also called "second LL information" herein), to indicate RX_STA that LL_STA has LL traffic to transmit. The LL_STA receives a LL packet arrival notification 11 (also called "first LL information" herein) from higher layers, process it, and sends the LL_IF. The AP receives the LL_IF and decides what actions to take (if any) to enable channel access to the LL_STA. This decision is included in the indication "A" 13 (also called "ind A" or "third LL information" herein), which can be inside of an acknowledgement 20 or in a separate frame. The AP may also indicate to the LL_STA an estimated channel access (CA) time up until which the LL_STA can expect to have channel access (which is, however, not guaranteed) and can transmit the LL data 21. This helps the LL_STA in scheduling the traffic to be transmitted next.

Since the AP can only take an action after the ongoing data unit 22 (e.g. PPDU, comprising a preamble field and a data field), i.e. the ongoing transmission of a data unit, ends, the LL_IF can be transmitted at any point of the ongoing PPDU, preferably at any point of the data field, without affecting the channel access delay of LL_STA. To avoid interfering with interframe spaces (IFS), the time between the LL arrival and the LL boundary (i.e., end of ongoing PPDU) should be greater than the LL processing time plus the LL_IF duration.

The actions involved in enabling priority channel access for LL_STA can be based on trigger frame (TF) to allow multi-user transmissions (from LL_STA and TX_STA) and/or preemption techniques to temporarily stop TX_STA's transmission.

A mechanism to support the LL_IF at the AP may be configured as follows. It should be ensured that the AP is in receiving mode when the LL_IF is transmitted so that it is able to detect the LL_IF. This can be supported in different ways.

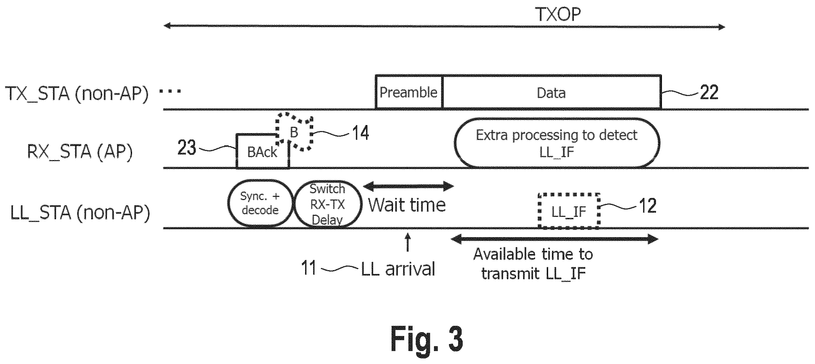

According to a first way, the TX_STA and LL_STA do not need to be in range (i.e., the TX_STA and LL_STA can be out range, but this embodiment also works if they are in range). An embodiment of an operation in such a situation is illustrated in the diagram shown in Fig. 3. The LL_STA cannot synchronize directly with the ongoing PPDU's PHY preamble. Thus, the AP may transmit an LL indication, e.g. may add an indication "B" 14 (also called "ind B" or "fourth LL information" herein) to the acknowledgement 23 and/or a TF sent before the ongoing PPDU 22, the indication B representing the LL indication or being included in the LL indication. The indication B may have one or more of the following functions:

- indicate that a LL_IF transmission is allowed in the upcoming PPDU;
- allow LL_STA to synchronize with the ongoing PPDU;
- indicate the type of ongoing PPDU for LL_STA to determine a "wait time" that identifies the data field location; and
- indicate a time window and/or set of subcarriers (within data field) where the LL_IF may be sent.

Thus, the LL_STA may be able to synchronize and extract such LL_IF assist information and get a physical layer (PHY) configuration for use in transmitting the LL_IF 12 after switching from RX to TX mode.

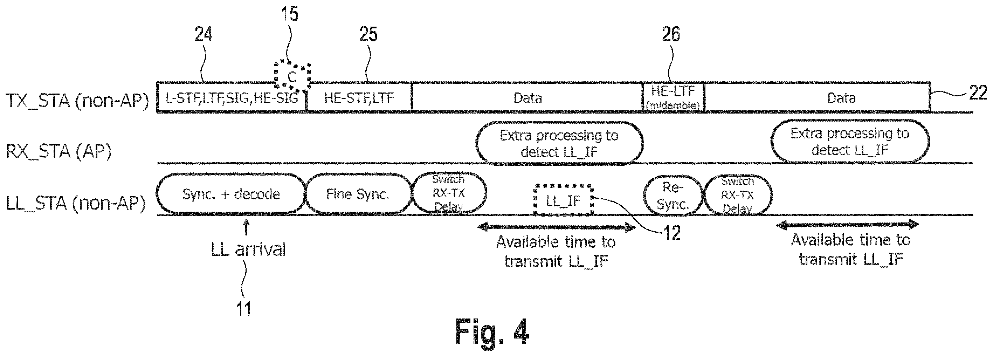

According to a second way, the TX_STA and LL_STA are in range. An embodiment of an operation in such a situation is illustrated in the diagram shown in Fig. 4. The LL_STA is in range of TX_STA transmissions enabling it to synchronize and decode the PHY preamble of the ongoing PPDU. To support the LL_IF transmission, the AP should instruct the TX_STA to transmit an LL indication, e.g. to add an indication "C" 15 (also called "ind C" or "fifth LL information" herein) to the PHY preamble 24 of the ongoing PPDU 22 to indicate the LL_STA that a LL_IF can be overlapped in this PPDU, , the indication C representing the LL indication or being included in the LL indication. Thus, the LL_STA may be able to synchronize and extract LL_IF assist information from the PHY preamble 24, carry out fine synchronization with the HE-STF, LTF preamble 25 of the ongoing PPDU 22 and get a PHY configuration ( i.e., the LL_STA makes the PHY configuration influenced by information obtained from other devices) for use in transmitting the LL_IF 12 after switching from RX to TX mode. Further, the LL_STA may use a midamble 26 of the ongoing PPDU 22 to re-synchronize and again get a PHY configuration for transmitting the LL_IF 12 or another LL_IF.

It is noted that both ways illustrated in Figs. 3 and 4 are not mutually exclusive and can be used to complement each other. The LL_IF allowed indication can also be made implicit by having the AP making a rule that allows LL_IF transmissions to overlap with frames having specific characteristics like a minimum number of OFDM symbols in the data field and no control or management frames.

The indications B (i.e. the fourth LL information) and C (i.e. the fifth LL information) represent embodiments of the LL indication and have two main purposes: 1) enable the LL_STA to synchronize with the PPDU sent by the TX_STA; and 2) provide information to the LL_STA to support the LL_IF transmission. Another point related to 1) is that the timeline of the transmissions should be clear. The indication B is preferably sent in a frame just before the ongoing PPDU will be sent. The LL_STA synchronizes to the frame containing indication B and it utilizes this frame to synchronize with the ongoing PPDU from the TX_STA since this transmission should come at a fixed time (e.g. SIFS) after the indication B. This case does not require the LL_STA and TX_STA to be in range of each other. The indication C is preferably sent within the ongoing PPDU which assumes that LL_STA and TX_STA are in range of each other. Thus, the LL_STA can synchronize directly with the ongoing PPDU.

In an embodiment the LL indication may be configured such that it does not only indicate to the LL_STA that transmission of LL_IF is allowed (which may simply be one indication bit), but also that transmission of LL_IF is allowed during and within the bandwidth of an ongoing transmission of a data unit from the the TX_STA to the AP. However, in an embodiment in which the indication just indicates the general allowance, the timing an bandwidth/frequency band may be predetermined or agreed in advance, i.e., it may be predetermined or agreed that transmission of LL_IF is allowed during and within the bandwidth of an ongoing transmission of a data unit from the the TX_STA to the AP.

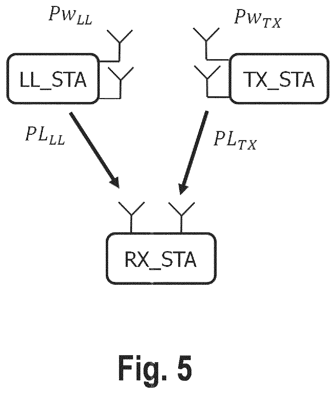

According to an embodiment power control is used for managing the amount of interference that the LL_IF causes and the detection probability of the LL_IF itself. This can be done based on a signal-to-interference ratio (SIR) metric that evaluates the ratio between TX_STA's and LL_STA's received power levels at the AP. A diagram of a corresponding parameters is shown in Fig. 5. Hereby, the following parameters and settings may be used:

Signal to Interference ratio: $SIR = \dfrac{\dfrac{Pw_{TX}}{PL_{TX}}}{\dfrac{Pw_{LL}}{PL_{LL}}}$

Transmission power of LL_STA: $Pw_{LL}$

Transmission power of TX_STA: $Pw_{TX}$

Pathloss between LL_STA and RX_STA: $PL_{LL}$

Pathloss between TX_STA and RX_STA: $PL_{TX}$

LL power control parameter to achieve target SIR

($SIR_{tg}$): $\alpha_{TX} = \dfrac{Pw_{TX}}{SIR_{tg}\, PL_{TX}}$

Setting transmission power $Pw_{LL}$ of LL_IF to respect SIR constraint: $Pw_{LL} < \alpha_{TX}PL_{LL} \Rightarrow SIR > SIR_{tg}$

Setting transmission power of LL_IF to enable its detection at RX_STA: $Pw_{LL} > \dfrac{\alpha_{TX}PL_{LL}}{m_{TX}}$

Condition on SIR margin ($m_{TX}$) for a feasible SIR constraint: $m_{TX} > 1$.

The AP shares power control information for LL_IF transmissions to achieve a target SIR within a minimum LL_IF detection margin. The margin can be selected from modulation and coding scheme (MCS) level, transmission power and/or received signal strength indicator (RSSI) accuracy of each STA.

The transmission power is generally controlled with overlapping transmissions, and it can limit the interference. Another approach which may be part of the LL_IF design is to spread the energy of the transmission into time, frequency and/or spatial domains. In this way, the interference affecting each spatial stream in each subcarrier of each OFDM symbol is reduced. This will be explained in more detail below.

Different options exist for sharing power control information to achieve a target SIR. In the following, two embodiments using different options are described in more detail.

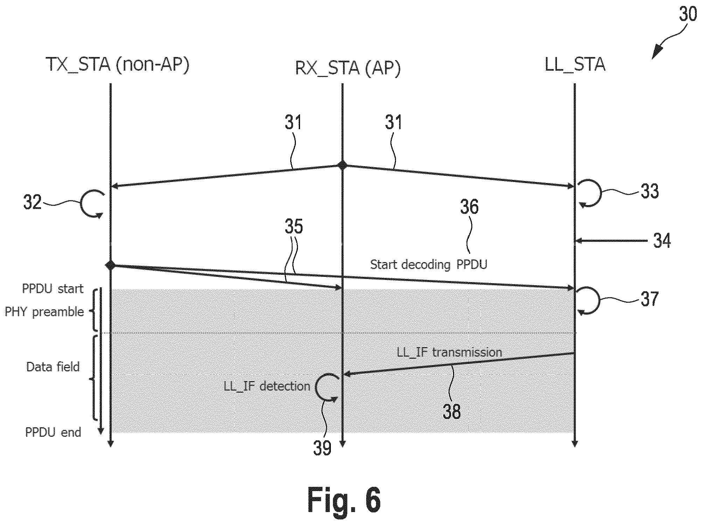

In a first embodiment, power control information is sent directly before the ongoing PPDU. A diagram of a corresponding operation 30 is illustrated in Fig. 6. In a first step 31 the AP sets two target uplink (UL) RSSI values, based on the target SIR, for TX_STA and LL_STA, and sends them to both STAs before the ongoing PPDU. This allows the TX_STA and LL_STA to set their respective transmission powers (steps 32 and 33) to satisfy the SIR target, i.e. to achieve target UL RSSI at AP. The AP also shares (in step 31) the target SIR and minimum LL_IF detection margin to allow LL_STA to adjust its transmission power within the acceptable margin. Further, the AP may transmit indication B in step 31, which may be retrieved by the LL_STA in step 33 to check if LL_IF is allowed. Alternatively or additionally, the TX_STA may transmit indication C in step 32 (or later) as well as SIR target and minimum LL_IF detection margin, which may be retrieved by the LL_STA in step 33 (or later) to check if LL_IF is allowed and to set transmission power.

In step 34 an urgent channel access request (from higher layers) arrives at the LL_STA. The TX_STA transmits a PPDU in step 35, and the AP may start decoding the (ongoing) PPDU in step 36. If the LL_STA is in range of TX_STA it can use (step 37) indication C to synchronize and extract the PHY preamble of the ongoing PPDU. If it is not in range of TX_STA it can use indication B for coarse synchronization and count wait time. Further, it can make an LL_IF transmission decision by checking time, frequency and power conditions. If it decides to transmit LL_IF, it sets the PHY configuration and transmits LL_IF in step 38. In step 39 the AP detects the LL_IF and takes corresponding measures, e.g. allows the LL_STA to transmit LL data (e.g. by transmitting indication A or a corresponding information to LL_STA) or denies such a transmission (e.g. by not transmitting indication A or transmitting a corresponding information to LL_STA).

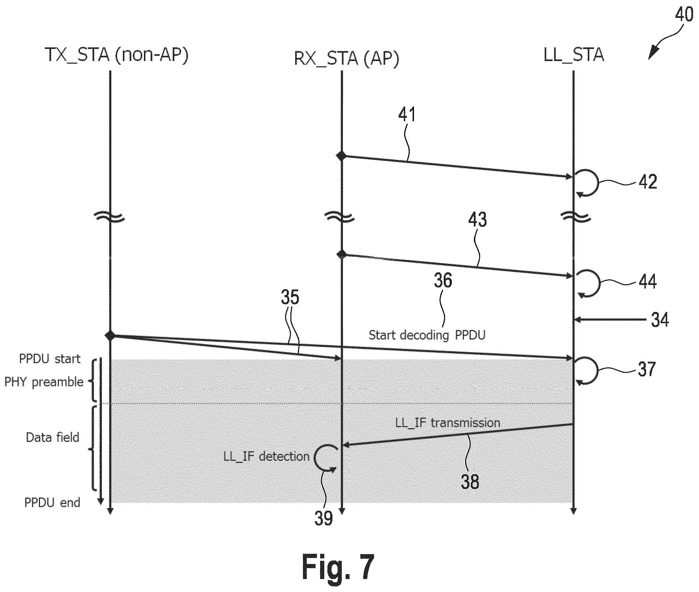

In a second embodiment, power control information is sent regularly. A diagram of a corresponding operation 40 is illustrated in Fig. 7. The AP regularly shares (step 41) with LL_STA the following power control information, e.g. as part of an acknowledgement or separate frames:

- about TX_STA transmissions: the received power level (at AP) from TX_STA transmission in upcoming PPDUs or the transmission power that TX_STA will use in upcoming PPDUs and pathloss between TX_STA and AP;
- transmission power used by the AP in the frame containing the power control information, which enables the LL_STA to compute the pathloss towards the AP;
- target SIR and minimum margin for LL_IF detection.

The LL_STA can then (step 42) calculate SIR at AP as a function of TX power and calculate TX power to satisfy SIR target. The AP may transmit indication B in step 43 which may be retrieved in step 44 by the LL_STA to check if LL_IF is allowed. Afterward, step 34 to 39 follow as explained above with respect to Fig. 6, wherein in step 37 the LL_STA additionally calculates SIR and transmission power to satisfy the SIR target, i.e. to achieve target UL RSSI at AP.

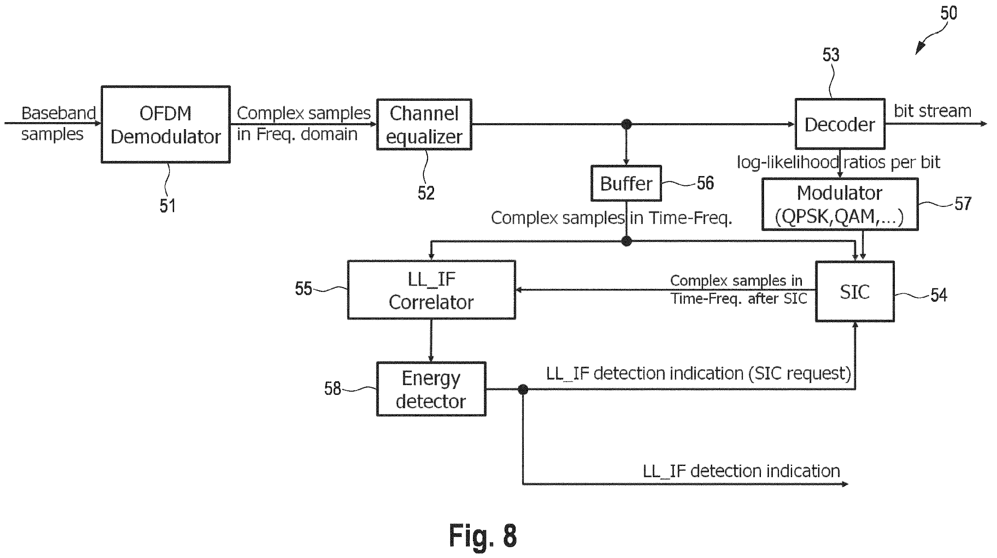

To perform the LL_IF detection operation at the receiver, the AP should know a predefined sequence of complex numbers that identifies the LL_STA, called LL_IF sequence, and it's time-frequency mapping. This sequence is preferably included in the LL_IF through OFDM modulation, overlapping with specific subcarriers and OFDM symbols of the ongoing PPDU. Thus, the receiver at the AP can perform the LL_IF detection after OFDM demodulation as shown in Fig. 8 showing a schematic diagram of an embodiment of a receiver 50 (i.e. the RX_STA or AP) according to the present disclosure. The details of the LL_IF sequence design and time-frequency mapping are explained below regarding the LL_STA processing.

The receiver operation, as shown in Fig. 8, starts with OFDM demodulation in an OFDM demodulator 51 to obtain received complex samples per subcarrier (in the frequency domain) for each OFDM symbol. Then, the channel equalizer 52 compensates for channel effects (including MIMO processing if any) and the complex samples sent to the decoder 53, self-interference cancellation (SIC) unit 54 and LL_IF correlator 55. The (optional) buffer 56 stores the complex samples from one or more OFDM symbols to obtain a time-frequency grid of complex samples that enables further joint processing of samples across OFDM symbols.

To process the ongoing PPDU, the decoder 53 decodes the codewords included in the complex samples and sends a stream of bits for further processing at higher layers. A side product of the decoder 53 are the log-likelihood ratios per bit in each codeword after applying the respective decoding algorithm (e.g., message passing). These log-likelihood ratios are then used by the modulator 57 to obtain the complete or partial complex samples in the buffered time-frequency grid that correspond to the original transmission of the TX_STA. These samples are then passed to the SIC unit 54 for cancelling the self-interference of the ongoing PPDU complex samples and aid the LL_IF detection.

To detect the LL_IF, the LL_IF correlator 55 performs a correlation operation between the known LL_IF sequences and the buffered time-frequency grid samples. The result of this correlation is sent to the energy detector 58 that indicates if a LL_IF has been detected when the energy of the correlation operation is above a set threshold. The LL_IF detection indication indicates if a LL_IF has been detected and optionally a SIC request to the SIC unit 54 in case an initial attempt to detect the LL_IF fails. The use of the buffer 56 is optional LL_IF detection since the LL_IF correlator 55 can store the results of correlation operations from previous OFDM symbols instead of needing to store complex samples.

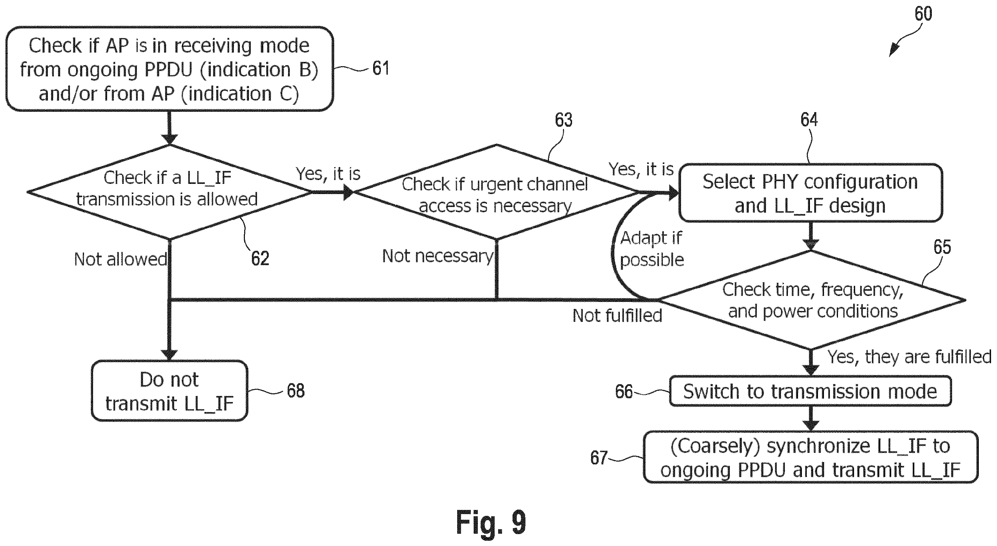

Fig. 9 shows a flow chart illustrating the general LL_STA operation 60 to send a LL_IF. To make sure the AP is in receiving mode (step 61) the LL_STA can retrieve the indication B in previous frames and/or the indication C in the ongoing PPDU. If there is an indication that a LL_IF transmission is allowed, as checked in step 62, then the LL_STA checks (step 63) if there is a higher layer notification to transmit urgent LL packets. If yes, the LL_STA configures (step 64) its PHY parameters and the design of LL_IF to be used based on time, frequency and power conditions. These conditions protect the ongoing PPDU from LL_IF interference and allow for the LL_IF to be detected at the AP. If these conditions can be met, as checked in step 65, the LL_STA switches to transmission mode (step 66), (coarsely) synchronizes and transmits the LL_IF overlapped with the ongoing PPDU (step 67). If a LL_IF transmission is not allowed (as checked in step 62) or if no urgent channel access is necessary (as checked in step 63) of if the time, frequency and power conditions cannot be fulfilled (as checked in step 65), then the LL_IF is not transmitted (step 68). Optionally, the time, frequency and power conditions may be adapted if possible.

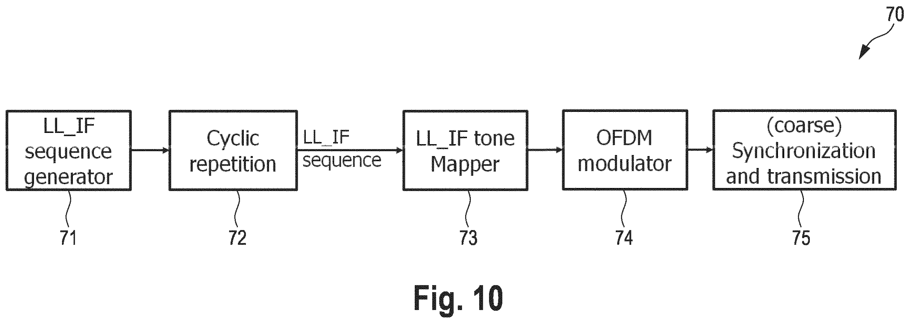

In the following, the LL_IF design, time, frequency and power conditions are described in more detail. An embodiment of LL_STA circuitry 70 for constructing the LL_IF is shown in Fig. 10. The LL_IF sequence generator 71 generates a sequence of complex numbers (e.g. of the form **+1,** - **1,** $e^{j\phi}$, $e^{-j\phi}$, ...) from a pseudo random operation, or from rows (or columns) of Hadamard or DFT matrices. This sequence can be repeated into sections and different phase shifts can be applied to each section by the cyclic repetition unit 72, resulting in the LL_IF sequence. The cyclic repetition may help the receiver at the AP to detect several energy spikes and increase the LL_IF detection probability.

The tone mapper 73 assigns each complex number of the LL_IF sequence to a specific subcarrier and OFDM symbol within the ongoing PPDU's OFDM configuration. In contrast to a regular tone mapper, as conventionally used in WLAN, the LL_IF tone mapper 73 leaves most of the subcarriers empty, since the LL_IF sequence is much smaller than the number of subcarriers and OFDM symbols in the ongoing PPDU's data field. Finally, the mapped symbols are OFDM modulated by an OFDM modulator 74, and a (coarse) synchronization is performed and the LL_IF is transmitted by a synchronization and transmission unit 75 to overlap with the ongoing PPDU's data field.

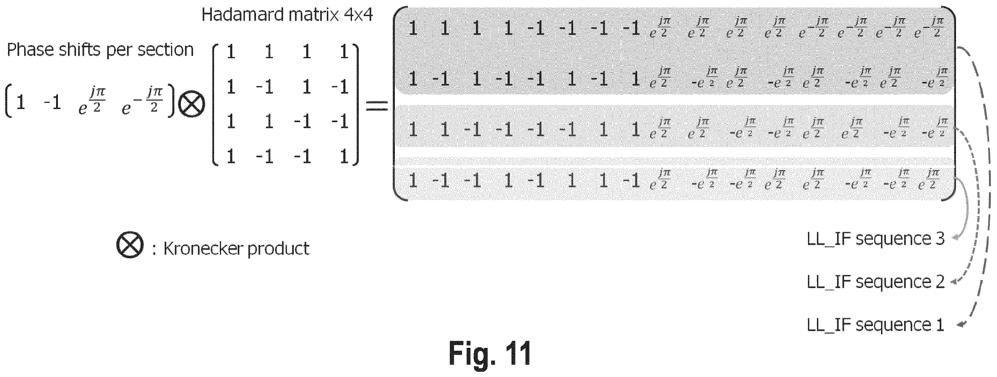

An example of the LL_IF sequence generation is shown in Fig. 11. Here, a 4 by 4 Hadamard matrix is multiplied via the Kronecker product with a row vector of 4 phase shifts. The resulting matrix is 4 by 16. Three LL_IF sequences can be generated, one with the first two rows, and two with the third and fourth rows, respectively.

The amount of energy that can be harvested by the LL_IF correlator 55 at the AP receiver 50 (as shown in Fig. 8) is proportional to the total length of the LL_IF sequence. Thus, this length should be larger than or equal to the target SIR multiplied by the minimum detection margin and a predefined scaling, all in linear scale. The margin determines the minimum transmission power at the LL_STA and accounts for SIC and/or MIMO processing gains at the AP receiver as well as power consumption limitations at the LL_STA transmitter. As an example, if the target SIR = 2 (i.e., ~3 dB), the minimum detection margin is $m_{TX}$ =2 (i.e., ~3 dB), and the predefined scaling is 2, then the LL_IF sequence must be at least 8. The predefined scaling decouples the transmission power setting and the LL_IF length to have more flexibility in designing the LL_IF.

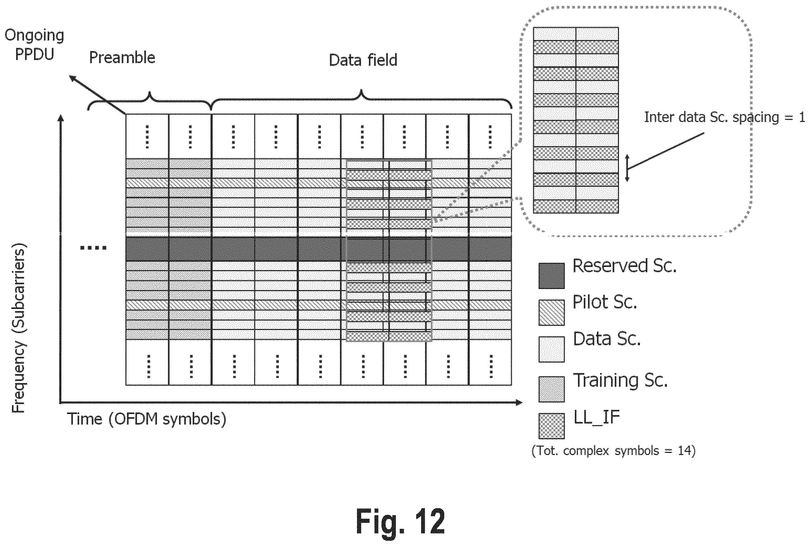

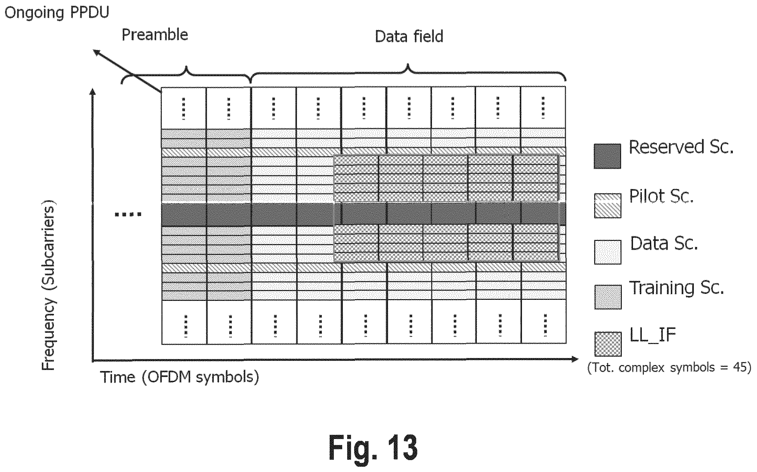

Figs. 12 and 13 show diagrams illustrating two types of LL_IF tone mapping methods that can be used, in particular sparse LL_IF mapping (Fig. 12) and contiguous LL_IF mapping (Fig. 13). The sparse mapping enables the spreading of the LL_IF across several subcarriers and OFDM symbols that do not need to be adjacent. The example in Fig. 12 maps the LL_IF tones evenly spaced by one subcarrier with respect to the data subcarriers in the ongoing PPDU. This offers diversity against channel variations. On the other hand, contiguous mapping as shown in Fig. 13 places the LL_IF sequence in adjacent subcarriers and OFDM symbols. This in turn simplifies the detection of the LL_IF at the AP.

For the LL_IF design and tone mapping there are a number of conditions that are preferred or even mandatory.

Regulatory conditions (regarding short control signaling transmissions not requiring listen before talk operation) include one or more of the following:

- The transmissions should be used to send management and control frames. LL_IF falls under this category.
- Within an observation period of e.g. 50 ms, the number of LL_IFs transmitted by a specific device (e.g., LL_STA) shall be equal or less than a predefined number, e.g. 50.
- The total (combined) duration of LL_IFs within the observation period of e.g. 50 ms shall be less than a predefined period, e.g. 2500 ms.

Non-regulatory conditions include one or more of the following:

- The LL_IF transmission should not exceed the duration of the ongoing PPDU.
- The LL_IF bandwidth should not exceed the ongoing PPDU bandwidth.
- The LL_IF should be confined in a specific time window and/or subcarriers group defined by the AP (if any).
- The LL_IF transmission power must satisfy the SIR target and minimum LL_IF detection margin at the AP.

The following conditions are optional:

- The LL_IF tone mapping should not cause consistent interference with adjacent encoded bits. This means to not overlap with the interleaving operation of binary convolutional codes or tone mapping of low-density parity check codes.
- The LL_IF should not overlap with pilot, guard or Null subcarriers of the ongoing PPDU.
- The LL_IF should not overlap with the PHY preamble of the ongoing PPDU unless a LTF based LL_IF is used.

Generally, the AP and the LL_STA should know the exact LL_IF sequence and the tone mapping used. Thus, several LL_IF configurations may be standardized and the AP can signal to the LL_STA which configuration to use, for example as part of the indication B or attached to the power control information.

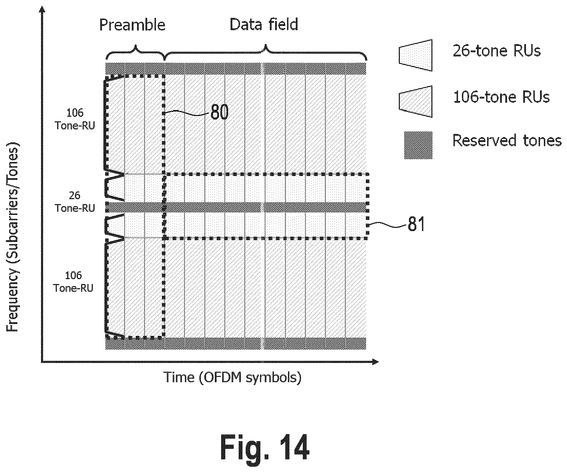

In the case where TX_STA and LL_STA are in range, the TX_STA can add information in the PHY preamble to assist the LL_STA in transmitting the LL_IF if needed. This is illustrated in Fig. 14 showing a diagram illustrating resource unit (RU) reservation and/or indication to assist a LL_IF transmission. The TX_STA should include the indication C as part of the PHY preamble if instructed by the AP unless certain conditions are stipulated, for example the ongoing PPDU being a control or management frame, having low latency traffic, being part of a sounding procedure, etc. The TX_STA may send power control information (TX power, SIR target, etc.) to LL_STA as shown in Figs. 6 and 7. The TX_STA can reserve and/or indicate a specific RU, indicated by dotted line 81, with low MCS level or empty to tolerate more LL_IF interference. The LL_IF can be sent in any OFDM symbol of this RU 81. The indication of the reserved RU can be included in the preamble indicated by dotted line 80.

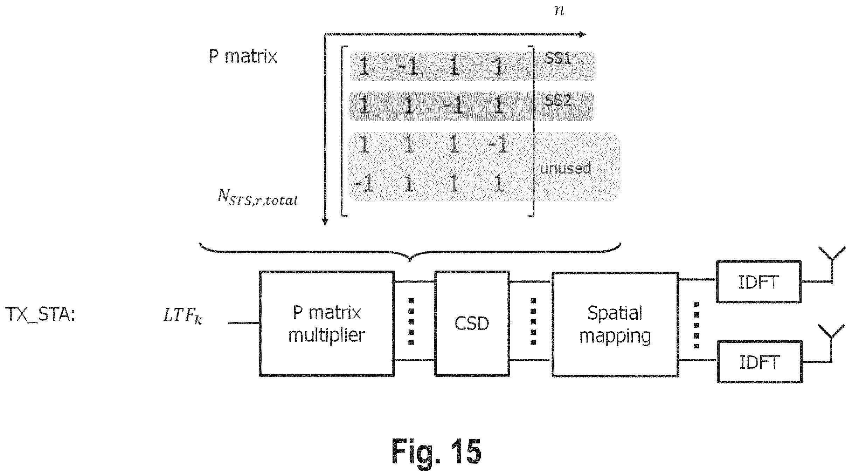

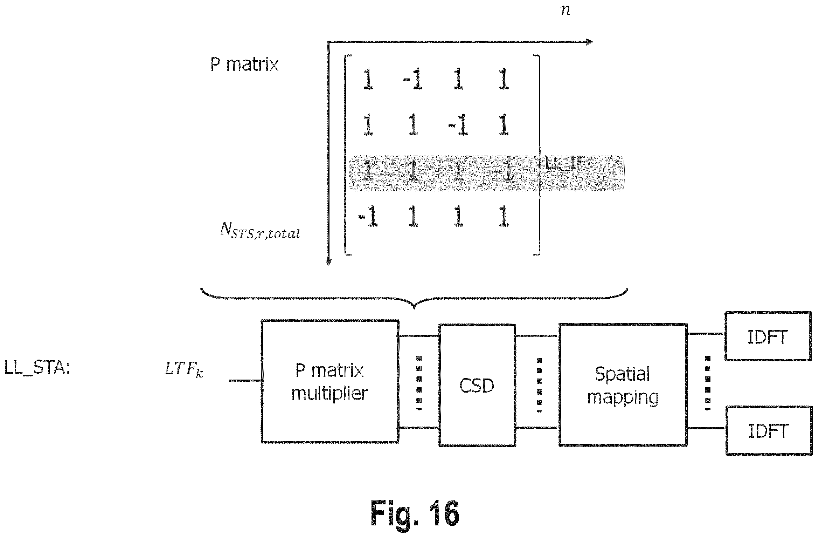

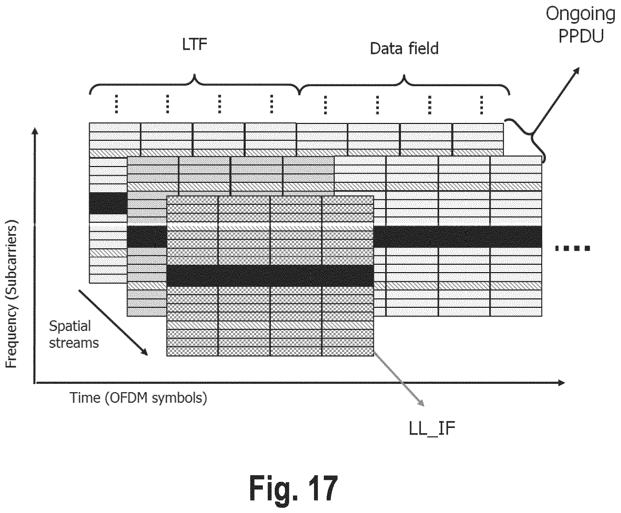

An alternative approach to design and send the LL_IF is to overlap it in the long training field (LTF) of the PHY preamble and/or midamble of the ongoing PPDU. This requires the LL_IF design to fit the LTF format of the ongoing PPDU (e.g., LTF type and guard interval). Figs. 15 to 17 illustrate an example of LTF-based LL_IF generation. Fig. 15 shows a schematic diagram of an embodiment of the TX_STA, Fig. 16 shows a schematic diagram of an embodiment of the LL_STA, and Fig. 17 shows a diagram illustrating an example of the corresponding tone mapping. In these figures, the index k indicates the tone, the index *n* indicates the high efficiency (HE-) LTF symbol to transmit and $N_{STS,r,total}$ indicates the total number of spatial streams from all STAs.

According to this embodiment the LL_IF may be mapped to an unused row of the P matrix in the LTF generation. An alternative can be for the TX_STA to leave one or more empty LTF symbols where the LL_STA can send the LTF-based LL_IF. The ongoing PPDU and LTF-based LL_IF transmissions should be synchronized which may be enabled by the mechanism shown in Fig. 3. The LTF-based LL_IF should only overlap with LTFs and not with the PHY preamble or data fields. However, the LL_STA can also insert a short training field (STF), at the beginning of the LTF-based LL_IF, to overlap with the STF of the ongoing PPDU. The inserted STF should be the same as the one in the ongoing PPDU which some minor cyclic diversity shifts that can be standardized. The purpose of inserting an overlapping STF is to assist the receiver at the AP to set its automatic gain control to account for the received LTF-based LL_IF.

An alternative to using STF is to send the LTF-based LL_IF with a lower power which would make adjustment of the AGC unnecessary. The power level can be set with the methods described above (e.g. in Figs. 5 to 7) with a high SIR target. The low power LTF-based LL_IF can still be detected by the receiver AP since the LTF design spans the entire PPDU bandwidth providing more spreading gain.

According to another alternative additional LTF symbols may be transmitted after the LTFs sent by the TX_STA. In this case the TX_STA should leave a time gap that corresponds to the duration of the additional LTFs between its own LTFs and the data field. The time gap should be smaller than a determined value, e.g., priority interframe space (PIFS), to avoid other devices mistaking the channel as free.

The AP, LL_STA and TX_STA should be aware of the usage of LTF-based LL_IFs and act accordingly. The AP should thus signal to both LL_STA and TX_STA the LTF-based LL_IF design (e.g., P matrix rows and/or LTF OFDM symbols) that may be used to overlap with upcoming PPDUs. For the reception of an ongoing PPDU, the AP may process the LTF with the LL_IF correlator and energy detector units as shown in Fig. 8. The TX_STA may leave, as per the AP's needs, at least one empty resource in the LTFs of the ongoing PPDU (e.g., P matrix rows and/or LTF OFDM symbols). The LL_STA may design the LTF-based LL_IF with the specifications given by the AP (e.g., P matrix rows and/or LTF OFDM symbols).

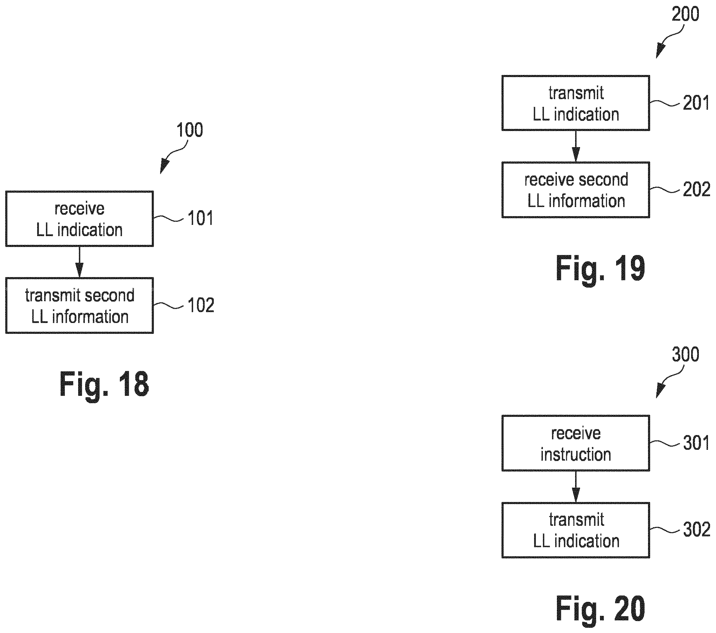

Fig. 18 shows a flow chart of an embodiment of a first communication method 100 of a first communication device (e.g. LL_STA) configured to communicate with a second communication device according to the present disclosure. In a first step 101, a low latency, LL, indication (e.g. an indication B or C as described above) is received from the second and/or third communication device. The LL indication indicates to the first communication device that transmission of a second LL information by the first communication device is allowed. Preferably, it indicates taht such a transmission is allowed during and within the bandwidth of an ongoing transmission of a data unit from the third communication device to the second communication device. In a second step 102, second LL information (e.g. an LL_IF notification as described above) is transmitted to the second communication device during and within the bandwidth of an ongoing transmission of a data unit from the third communication device to the second communication device, wherein the second LL information indicates to the second communication device that the first communication device has LL data to transmit to the second communication device.

Fig. 19 shows a flow chart of an embodiment of a second communication method 200 of a second communication device (e.g. RX_STA or AP) configured to communicate with a first communication device and a third communication device according to the present disclosure. In a first step 201, an LL indication is transmitted, which indicates to the first communication device that transmission of a second LL information by the first communication device is allowed during and within the bandwidth of an ongoing transmission of a data unit from the third communication device to the second communication device. In a second step 202, second LL information is received from the first communication device during and within the bandwidth of an ongoing transmission of a data unit from the third communication device to the second communication device, wherein the second LL information indicates the second communication device that the first communication device has LL data to transmit to the second communication device.

Fig. 20 shows a flow chart of an embodiment of a third communication method 300 of a third communication device (e.g. TX_STA) configured to communicate with a second communication device according to the present disclosure. In a first step 301 an instruction is received from the second communication device to transmit an LL indication. In a second step 302 the LL indication is transmitted.

Thus, the foregoing discussion discloses and describes merely exemplary embodiments of the present disclosure. As will be understood by those skilled in the art, the present disclosure may be embodied in other specific forms without departing from the spirit or essential characteristics thereof. Accordingly, the disclosure of the present disclosure is intended to be illustrative, but not limiting of the scope of the disclosure, as well as other claims. The disclosure, including any readily discernible variants of the teachings herein, defines, in part, the scope of the foregoing claim terminology such that no inventive subject matter is dedicated to the public.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure. Further, such a software may also be distributed in other forms, such as via the Internet or other wired or wireless telecommunication systems.

The elements of the disclosed devices, apparatus and systems may be implemented by corresponding hardware and/or software elements, for instance appropriated circuits or circuitry. A circuit is a structural assemblage of electronic components including conventional circuit elements, integrated circuits including application specific integrated circuits, standard integrated circuits, application specific standard products, and field programmable gate arrays. Further, a circuit includes central processing units, graphics processing units, and microprocessors which are programmed or configured according to software code. A circuit does not include pure software, although a circuit includes the above-described hardware executing software. A circuit or circuitry may be implemented by a single device or unit or multiple devices or units, or chipset(s), or processor(s).

**Claims**

1. First communication device configured to communicate with a second communication device, the first communication device comprising circuitry configured to:

    - receive a low latency, LL, indication from the second and/or third communication device, which indicates to the first communication device that transmission of a second LL information by the first communication device is allowed; and
    - transmit second LL information to the second communication device during and within the bandwidth of an ongoing transmission of a data unit from the third communication device to the second communication device, wherein the second LL information indicates to the second communication device that the first communication device has LL data to transmit to the second communication device.

2. First communication device as claimed in claim 1, wherein the LL indication is configured to indicate to the first communication device that transmission of a second LL information by the first communication device is allowed during and within the bandwidth of an ongoing transmission of a data unit from the third communication device to the second communication device.

3. First communication device as claimed in claim 1 or 2,
    wherein the circuitry is configured to transmit the second LL information in a manner that causes low or no interference or interference below an interference threshold with the ongoing transmission of the data unit from the third communication device to the second communication device, and/or
    by one or more of the following:

    - modulating a subset of OFDM symbols of the ongoing transmission of the data unit;
    - modulating a subset of subcarriers of the ongoing transmission of the data unit; and
    - mapping a subset of spatial streams of the ongoing transmission of the data unit with a steering matrix.

4. First communication device as claimed in any one of the preceding claims,

    wherein the circuitry is configured to control transmission power of the transmission of the second LL information based on one or more of

        - a target signal-to-interference ratio at the second communication device,
        - an interference threshold that shall not be exceeded by the transmission of the second LL information,
        - transmit and/or receive power levels of the second communication device,
        - pathloss information about pathloss between the second communication device

    and the third communication device and between the second communication device and the first communication device, and

        - a minimum detection margin for detecting the second LL information by the second communication device.

5. First communication device as claimed in any one of the preceding claims, wherein the circuitry is configured to

    i) synchronize with the transmission of the next data unit by the third communication device and/or decode content of fourth LL information transmitted by the second communication device, the fourth LL information indicating to the first communication device one or more of the following:

        - the first communication device is allowed to transmit the second LL information during transmission of the next data unit transmitted by the third communication device;
        - the first communication device can use the fourth LL information to synchronize with the transmission of the next data unit by the third communication device;
        - the type of next data unit transmitted by the third communication device; and
        - a time window and/or a set of subcarriers for use by the first communication device for transmitting the second LL information;

    and/or
    ii) synchronize with the ongoing transmission of a data unit by the third communication device and/or decode content of fifth LL information transmitted by the third communication device, the fifth LL information indicating to the first communication device on one or more of the following:

- the first communication device is allowed to transmit the second LL information during the ongoing transmission of the data unit transmitted by the third communication device;
- the type of data unit transmitted by the third communication device in the ongoing transmission; and
- a time window and/or a set of subcarriers for use by the first communication device for transmitting the second LL information; and/or

iii) synchronize with the ongoing transmission of the data unit from the third communication device by one or more of the following:

- synchronizing with a previous frame containing fourth LL information transmitted by the second communication device which is transmitted a predetermined time before the transmission of the ongoing data unit transmitted by the third communication device;
- synchronizing with the preamble of the ongoing transmission of the data unit transmitted by the third communication device containing fifth LL information; and
- synchronizing with the preamble of the ongoing transmission of the data unit transmitted by the third communication device after a previous frame containing fourth LL information has been received from the second communication device.

6. Second communication device configured to communicate with a first communication device and a third communication device, the second communication device comprising circuitry configured to:

- transmit a low latency, LL, indication, which indicates to the first communication device that transmission of a second LL information by the first communication device is allowed; and
- receive second LL information from the first communication device during and within the bandwidth of an ongoing transmission of a data unit from the third communication device to the second communication device, wherein the second LL information indicates the second communication device that the first communication device has LL data to transmit to the second communication device.

7. Second communication device as claimed in claim 6, wherein the circuitry is configured to transmit third LL information to the first communication device, indicating to the first communication device if and when the first communication device is allowed to transmit the LL data to the second communication device, and/or to transmit the third LL information as part of an acknowledgement or as separate frame.

8. Second communication device as claimed in claim 6 or 7, wherein the circuitry is configured to transmit one or more of

- a target signal-to-interference ratio at the second communication device,
- an interference threshold that shall not be exceeded by the transmission of the second LL information,
- transmit and/or receive power levels of the second communication device,
- pathloss information about pathloss between the second communication device and the third communication device and/or between the second communication device and the first communication device, and
- a minimum detection margin for detecting the second LL information by the second communication device.

9. Second communication device as claimed in claim 6, 7 or 8, wherein the circuitry is configured to detect the second LL information by use of knowledge about an LL sequence used by the first communication device for identifying the first communication device and about the mapping of the LL sequence into predetermined subcarriers within OFDM symbols used by the first communication device for transmitting the second LL information. in particular by additional use of a self-interference cancellation operation based on likelihood ratios of bits of the data unit received from the third communication device and/or by detecting the data unit received from the third communication device, subtracting the detected data unit from the received signal and detecting the second LL information in the remaining signal.

10. Third communication device configured to communicate with a second communication device, the third communication device comprising circuitry configured to:

- receive an instruction from the second communication device to transmit a low latency, LL, indication, which indicates to a first communication device that transmission of a second LL information by the first communication device is allowed; and
- transmit the LL indication.

11. Third communication device as claimed in claim 10, wherein the circuitry is configured to

- receive an instruction from the second communication device to transmit fifth low latency, LL, information, the fifth LL information indicating to the first communication device one or more of the following:

- the first communication device is allowed to transmit second LL information during the ongoing transmission of the data unit transmitted by the third communication device, the second LL information indicating to the second communication device that the first communication device has LL data to transmit to the second communication device;
- the first communication device can use the fifth LL information to synchronize with the ongoing transmission of the data unit by the third communication device;
- the type of data unit transmitted by the third communication device in the ongoing transmission; and
- a time window and/or a set of subcarriers for use by the first communication device for transmitting the second LL information;

- transmit the fifth LL information; and
- transmit a data unit to the second communication device.

12. First communication method of a first communication device configured to communicate with a second communication device, the first communication method comprising:

- receiving a low latency, LL, indication from the second and/or third communication device, which indicates to the first communication device that transmission of a second LL information by the first communication device is allowed; and
- transmitting second LL information to the second communication device during and within the bandwidth of an ongoing transmission of a data unit from the third communication device to the second communication device, wherein the second LL information indicates to the second communication device that the first communication device has LL data to transmit to the second communication device.

13. Second communication method of a second communication device configured to communicate with a first communication device and a third communication device, the second communication method comprising:

- transmitting a low latency, LL, indication, which indicates to the first communication device that transmission of a second LL information by the first communication device is allowed during and within the bandwidth of an ongoing transmission of a data unit from the third communication device to the second communication device; and
- receiving second LL information from the first communication device during and within the bandwidth of an ongoing transmission of a data unit from the third communication device to the second communication device, wherein the second LL information indicates the second communication device that the first communication device has LL data to transmit to the second communication device.

14. Third communication method of a third communication device configured to communicate with a second communication device, the third communication method comprising:

- receiving an instruction from the second communication device to transmit a low latency, LL, indication, which indicates to a first communication device that transmission of a second LL information by the first communication device is allowed; and
- transmitting the LL indication.

15. A computer program comprising program code which, when executed on a computer, causes the computer to perform any one of the first communication method according to claim 12, the second communication method according to claim 13 or the third communication method according to claim 14.

**Patentansprüche**

1. Erste Kommunikationsvorrichtung, die konfiguriert ist, um mit einer zweiten Kommunikationsvorrichtung zu kommunizieren, die erste Kommunikationsvorrichtung umfassend eine Schaltung, die konfiguriert ist zum:

- Empfangen einer Anzeige mit geringer Latenzzeit, LL-Anzeige, von der zweiten und/oder der dritten Kommunikationsvorrichtung, die der ersten Kommunikationsvorrichtung anzeigt, dass eine Übertragung zweiter **LL**-Informationen durch die erste Kommunikationsvorrichtung gestattet ist; und

- Übertragen zweiter LL-Informationen an die zweite Kommunikationsvorrichtung während und innerhalb der Bandbreite einer laufenden Übertragung einer Dateneinheit von der dritten Kommunikationsvorrichtung zu der zweiten Kommunikationsvorrichtung, wobei die zweiten LL-Informationen der zweiten Kommunikationsvorrichtung anzeigen, dass die erste Kommunikationsvorrichtung LL-Daten aufweist, um an die zweite Kommunikationsvorrichtung zu übertragen.

2. Erste Kommunikationsvorrichtung nach Anspruch 1, wobei die LL-Anzeige konfiguriert ist, um der ersten Kommunikationsvorrichtung anzuzeigen, dass die Übertragung zweiter LL-Informationen durch die erste Kommunikationsvorrichtung während und innerhalb der Bandbreite einer laufenden Übertragung einer Dateneinheit von der dritten Kommunikationsvorrichtung an die zweite Kommunikationsvorrichtung gestattet ist.

3. Erste Kommunikationsvorrichtung nach Anspruch 1 oder 2,

wobei die Schaltung konfiguriert ist, um die zweiten LL-Informationen auf eine Weise zu übertragen, die geringe oder keine Interferenzen oder Interferenzen unterhalb eines Interferenzschwellenwerts mit der laufenden Übertragung der Dateneinheit von der dritten Kommunikationsvorrichtung zu der zweiten Kommunikationsvorrichtung veranlasst, und/oder durch eines oder mehrere der Folgenden:

- Modulieren eines Teilsatzes von OFDM-Symbolen der laufenden Übertragung der Dateneinheit;
- Modulieren eines Teilsatzes von Unterträgern der laufenden Übertragung der Dateneinheit; und
- Abbilden eines Teilsatzes von räumlichen Strömen der laufenden Übertragung der Dateneinheit mit einer Steuerungsmatrix.

4. Erste Kommunikationsvorrichtung nach einem der vorstehenden Ansprüche, wobei die Schaltung konfiguriert ist, um eine Übertragungsleistung der Übertragung der zweiten LL-Informationen basierend auf einem oder mehreren zu steuern von

- einem Ziel-Signal-Interferenz-Verhältnis an der zweiten Kommunikationsvorrichtung,
- einem Interferenzschwellenwert, der bei der Übertragung der zweiten LL-Informationen nicht überschritten werden darf,
- Übertragungs- und/oder Empfangsleistungspegel der zweiten Kommunikationsvorrichtung,
- Pfadverlustinformationen über den Pfadverlust zwischen der zweiten Kommunikationsvorrichtung und der dritten Kommunikationsvorrichtung und zwischen der zweiten Kommunikationsvorrichtung und der ersten Kommunikationsvorrichtung, und
- einer Mindesterkennungsspanne zum Erkennen der zweiten LL-Informationen durch die zweite Kommunikationsvorrichtung.

5. Erste Kommunikationsvorrichtung nach einem der vorstehenden Ansprüche, wobei die Schaltung konfiguriert ist zum

i) Synchronisieren mit der Übertragung der nächsten Dateneinheit durch die dritte Kommunikationsvorrichtung und/oder Decodieren des Inhalts vierter LL-Informationen, die durch die zweite Kommunikationsvorrichtung übertragen wird, wobei die vierten LL-Informationen der ersten Kommunikationsvorrichtung eines oder mehrere der Folgenden anzeigen:

- der ersten Kommunikationsvorrichtung wird gestattet, die zweiten LL-Informationen während der Übertragung der nächsten Dateneinheit, die durch die dritten Kommunikationsvorrichtung übertragen wird, zu übertragen;
- die erste Kommunikationsvorrichtung kann die vierten LL-Informationen verwenden, um mit der Übertragung der nächsten Dateneinheit durch die dritte Kommunikationsvorrichtung zu synchronisieren;
- der Art der nächsten Dateneinheit, die durch die dritte Kommunikationsvorrichtung übertragen wird; und
- einem Zeitfenster und/oder einem Satz von Unterträgern zur Verwendung durch die erste Kommunikationsvorrichtung zum Übertragen der zweiten LL-Informationen; und/oder

ii) Synchronisieren mit der laufenden Übertragung einer Dateneinheit durch die dritte Kommunikationsvorrichtung und/oder Decodieren des Inhalts fünfter LL-Informationen, die durch die dritte Kommunikationsvorrichtung übertragen werden, wobei die fünften LL-Informationen der ersten Kommunikationsvorrichtung eines oder mehrere der Folgenden anzeigen:

- der ersten Kommunikationsvorrichtung wird gestattet, die zweiten LL-Informationen während der laufenden Übertragung der Dateneinheit, die durch die dritten Kommunikationsvorrichtung übertragen wird, zu übertragen;
- der Art der Dateneinheit, die durch die dritte Kommunikationsvorrichtung in der laufenden Übertragung übertragen wird; und
- einem Zeitfenster und/oder einem Satz von Unterträgern zur Verwendung durch die erste Kommunikationsvorrichtung zum Übertragen der zweiten LL-Informationen; und/oder

iii) Synchronisieren mit der laufenden Übertragung der Dateneinheit von der dritten Kommunikationsvorrichtung durch eine oder mehrere der Folgenden:

- Synchronisieren mit einem vorherigen Frame, der vierte LL-Informationen enthält, die durch die zweite Kommunikationsvorrichtung übertragen werden, die eine zuvor bestimmte Zeit vor der Übertragung der laufenden Dateneinheit übertragen werden, die durch die dritte Kommunikationsvorrichtung übertragen wird;
- Synchronisieren mit der Präambel der laufenden Übertragung der Dateneinheit, die durch die dritte Kommunikationsvorrichtung, die fünfte LL-Informationen enthält, übertragen wird; und
- Synchronisieren mit der Präambel der laufenden Übertragung der Dateneinheit, die durch die dritte Kommunikationsvorrichtung übertragen wird, nachdem ein vorheriger Frame, der vierte LL-Informationen enthält, von der zweiten Kommunikationsvorrichtung empfangen wurde.

6. Zweite Kommunikationsvorrichtung, die konfiguriert ist, um mit einer ersten Kommunikationsvorrichtung und einer dritten Kommunikationsvorrichtung zu kommunizieren, die zweite Kommunikationsvorrichtung umfassend eine Schaltung, die konfiguriert ist zum:

- Übertragen einer Anzeige mit geringer Latenzzeit, LL-Anzeige, die der ersten Kommunikationsvorrichtung anzeigt, dass die Übertragung zweiter LL-Informationen durch die erste Kommunikationsvorrichtung gestattet ist; und
- Empfangen zweiter LL-Informationen von der ersten Kommunikationsvorrichtung während und innerhalb der Bandbreite einer laufenden Übertragung einer Dateneinheit von der dritten Kommunikationsvorrichtung zu der zweiten Kommunikationsvorrichtung, wobei die zweiten LL-Informationen der zweiten Kommunikationsvorrichtung anzeigen, dass die erste Kommunikationsvorrichtung LL-Daten aufweist, um an die zweite Kommunikationsvorrichtung zu übertragen.

7. Zweite Kommunikationsvorrichtung nach Anspruch 6,
wobei die Schaltung konfiguriert ist, um dritte LL-Informationen an die erste Kommunikationsvorrichtung zu übertragen, die der ersten Kommunikationsvorrichtung anzeigen, ob und wann es der ersten Kommunikationsvorrichtung gestattet ist, die LL-Daten an die zweite Kommunikationsvorrichtung zu übertragen, und/oder um die dritten LL-Informationen als Teil einer Bestätigung oder als separaten Frame zu übertragen.

8. Zweite Kommunikationsvorrichtung nach Anspruch 6 oder 7,
wobei die Schaltung konfiguriert ist, um eines oder mehrere zu übertragen von

- einem Zielsignal-Interferenz-Verhältnis an der zweiten Kommunikationsvorrichtung,
- einem Interferenzschwellenwert, der bei der Übertragung der zweiten LL-Informationen nicht überschritten werden darf,
- Übertragungs- und/oder Empfangsleistungspegel der zweiten Kommunikationsvorrichtung,
- Pfadverlustinformationen über den Pfadverlust zwischen der zweiten Kommunikationsvorrichtung und der dritten Kommunikationsvorrichtung und/oder zwischen der zweiten Kommunikationsvorrichtung und der ersten Kommunikationsvorrichtung, und
- einer Mindesterkennungsspanne zum Erkennen der zweiten LL-Informationen durch die zweite Kommunikationsvorrichtung.

9. Zweite Kommunikationsvorrichtung nach Anspruch 6, 7 oder 8,
wobei die Schaltung konfiguriert ist, um die zweiten LL-Informationen durch Verwendung von Wissen über eine LL-Sequenz zu erkennen, die durch die erste Kommunikationsvorrichtung zum Identifizieren der ersten Kommunikationsvorrichtung verwendet wird, und über das Abbilden der LL-Sequenz in zuvor bestimmte Unterträger innerhalb von OFDM-Symbolen, die durch die erste Kommunikationsvorrichtung zum Übertragen der zweiten LL-Informationen verwendet werden, insbesondere durch zusätzliche Verwendung einer Selbstinterferenzunterdrückungsoperation basierend auf Wahrscheinlichkeitsverhältnissen von Bits der Dateneinheit, die von der dritten Kommunikationsvorrichtung empfangen wird, und/oder durch Erkennen der Dateneinheit, die von der dritten Kommunikationsvorrichtung empfangen wird, Subtrahieren der erkannten Dateneinheit von dem empfangenen Signal und Erkennen der zweiten LL-Informationen in dem verbleibenden Signal.

**10.** Dritte Kommunikationsvorrichtung, die konfiguriert ist, um mit einer zweiten Kommunikationsvorrichtung zu kommunizieren, die dritte Kommunikationsvorrichtung umfassend eine Schaltung, die konfiguriert ist zum:

- Empfangen einer Anweisung von der zweiten Kommunikationsvorrichtung, eine Anzeige mit geringer Latenzzeit, LL-Anzeige, zu übertragen, die eine erste Kommunikationsvorrichtung anzeigt, dass die Übertragung zweiter LL-Informationen durch die erste Kommunikationsvorrichtung gestattet ist; und
- Übertragen der LL-Anzeige.

**11.** Dritte Kommunikationsvorrichtung nach Anspruch 10,
wobei die Schaltung konfiguriert ist zum

- Empfangen einer Anweisung von der zweiten Kommunikationsvorrichtung, fünfte Informationen mit geringer Latenzzeit, LL-Informationen, zu übertragen, wobei die fünften LL-Informationen der ersten Kommunikationsvorrichtung eines oder mehrere der Folgenden anzeigen:
- der ersten Kommunikationsvorrichtung wird gestattet, während der laufenden Übertragung der Dateneinheit, die durch die dritte Kommunikationsvorrichtung übertragen wird, zweite LL-Informationen zu übertragen, wobei die zweiten LL-Informationen der zweiten Kommunikationsvorrichtung anzeigen, dass die erste Kommunikationsvorrichtung LL-Daten aufweist, um an die zweite Kommunikationsvorrichtung zu übertragen;
- die erste Kommunikationsvorrichtung kann die fünften LL-Informationen verwenden, um sich mit der laufenden Übertragung der Dateneinheit durch die dritte Kommunikationsvorrichtung zu synchronisieren;
- die Art der Dateneinheit, die durch die dritte Kommunikationsvorrichtung in der laufenden Übertragung übertragen wird; und
- ein Zeitfenster und/oder einen Satz von Unterträgern zur Verwendung durch die erste Kommunikationsvorrichtung zum Übertragen der zweiten LL-Informationen;
- Übertragen der fünften LL-Information; und
- Übertragen einer Dateneinheit an die zweite Kommunikationsvorrichtung.

**12.** Erstes Kommunikationsverfahren einer ersten Kommunikationsvorrichtung, die konfiguriert ist, um mit einer zweiten Kommunikationsvorrichtung zu kommunizieren, das erste Kommunikationsverfahren umfassend:

- Empfangen einer Anzeige mit geringer Latenzzeit, LL-Anzeige, von der zweiten und/oder dritten Kommunikationsvorrichtung, die der ersten Kommunikationsvorrichtung anzeigt, dass die Übertragung zweiter LL-Informationen durch die erste Kommunikationsvorrichtung gestattet ist; und
- Übertragen zweiter LL-Informationen an die zweite Kommunikationsvorrichtung während und innerhalb der Bandbreite einer laufenden Übertragung einer Dateneinheit von der dritten Kommunikationsvorrichtung zu der zweiten Kommunikationsvorrichtung, wobei die zweiten LL-Informationen der zweiten Kommunikationsvorrichtung anzeigen, dass die erste Kommunikationsvorrichtung LL-Daten aufweist, um an die zweite Kommunikationsvorrichtung zu übertragen.

**13.** Zweites Kommunikationsverfahren einer zweiten Kommunikationsvorrichtung, die konfiguriert ist, um mit einer ersten Kommunikationsvorrichtung und einer dritten Kommunikationsvorrichtung zu kommunizieren, das zweite Kommunikationsverfahren umfassend:

- Übertragen einer Anzeige mit niedriger Latenzzeit, LL-Anzeige, die der ersten Kommunikationsvorrichtung anzeigt, dass die Übertragung zweiter LL-Informationen durch die erste Kommunikationsvorrichtung während und innerhalb der Bandbreite einer laufenden Übertragung einer Dateneinheit von der dritten Kommunikationsvorrichtung zu der zweiten Kommunikationsvorrichtung gestattet ist; und
- Empfangen zweiter LL-Informationen von der ersten Kommunikationsvorrichtung während und innerhalb der Bandbreite einer laufenden Übertragung einer Dateneinheit von der dritten Kommunikationsvorrichtung zu der zweiten Kommunikationsvorrichtung, wobei die zweiten LL-Informationen der zweiten Kommunikationsvorrichtung anzeigen, dass die erste Kommunikationsvorrichtung LL-Daten aufweist, um an die zweite Kommunikationsvorrichtung zu übertragen.

**14.** Drittes Kommunikationsverfahren einer dritten Kommunikationsvorrichtung, die konfiguriert ist, um mit einer zweiten Kommunikationsvorrichtung zu kommunizieren, das dritte Kommunikationsverfahren umfassend:

- Empfangen einer Anweisung von der zweiten Kommunikationsvorrichtung, eine Anzeige mit geringer Latenzzeit, LL-Anzeige, zu übertragen, die einer ersten Kommunikationsvorrichtung anzeigt, dass die Übertragung zweiter LL-Infor-

mationen durch die erste Kommunikationsvor-
richtung gestattet ist; und
- Übertragen der LL-Anzeige.

**15.** Computerprogramm, umfassend Programmcode,
der, wenn er auf einem Computer ausgeführt wird,
den Computer veranlasst, ein beliebiges eines des
ersten Kommunikationsverfahrens nach Anspruch
12, des zweiten Kommunikationsverfahrens nach
Anspruch 13 oder des dritten Kommunikationsverfahrens nach Anspruch 14 durchzuführen.

**Revendications**

**1.** Premier dispositif de communication configuré pour
communiquer avec un deuxième dispositif de
communication, le premier dispositif de communication comprenant une circuiterie configurée pour :

- recevoir une indication de faible latence (LL)
provenant du deuxième et/ou du troisième dispositif de communication, qui indique au premier
dispositif de communication que la transmission
de deuxièmes informations LL par le premier
dispositif de communication est autorisée ; et
- transmettre les deuxièmes informations LL au
deuxième dispositif de communication pendant
et dans la largeur de bande d'une transmission
en cours d'une unité de données du troisième
dispositif de communication au deuxième dispositif de communication, dans lequel les deuxièmes informations LL indiquent au deuxième
dispositif de communication que le premier dispositif de communication présente des données
LL à transmettre vers le deuxième dispositif de
communication.

**2.** Premier dispositif de communication selon la revendication 1,
dans lequel l'indication LL est configurée pour indiquer au premier dispositif de communication que la
transmission de deuxièmes informations LL par le
premier dispositif de communication est autorisée
pendant et dans la largeur de bande d'une transmission en cours d'une unité de données du troisième
dispositif de communication vers le deuxième dispositif de communication.

**3.** Premier dispositif de communication selon la revendication 1 ou 2,

dans lequel la circuiterie est configurée pour
transmettre les deuxièmes informations LL de
manière à provoquer un brouillage faible ou nul
ou un brouillage inférieur à un seuil de brouillage
avec la transmission en cours de l'unité de données du troisième dispositif de communication vers le deuxième dispositif de communication,
et/ou
par un ou plusieurs de ce qui suit :

- la modulation d'un sous-ensemble de
symboles OFDM de la transmission en
cours de l'unité de données ;
- la modulation d'un sous-ensemble de
sous-porteuses de la transmission en cours
de l'unité de données ; et
- le mappage d'un sous-ensemble de flux
spatiaux de la transmission en cours de
l'unité de données avec une matrice de
pilotage.

**4.** Premier dispositif de communication selon l'une
quelconque des revendications précédentes,
dans lequel la circuiterie est configurée pour
commander la puissance de transmission des deuxièmes informations LL sur la base d'un ou de plusieurs parmi

- un rapport signal/brouillage cible au niveau du
deuxième dispositif de communication,
- un seuil de brouillage qui ne doit pas être
dépassé par la transmission des deuxièmes
informations LL,
- des niveaux de puissance de transmission
et/ou de réception du deuxième dispositif de
communication,
- des informations de perte de chemin sur la
perte de chemin entre le deuxième dispositif de
communication et le troisième dispositif de
communication et entre le deuxième dispositif
de communication et le premier dispositif de
communication, et
- une marge de détection minimale permettant
de détecter les deuxièmes informations LL par le
deuxième dispositif de communication.

**5.** Premier dispositif de communication selon l'une
quelconque des revendications précédentes,
dans lequel la circuiterie est configurée pour

i) se synchroniser avec la transmission de l'unité
de données suivante par le troisième dispositif
de communication et/ou décoder un contenu
des quatrièmes informations LL transmises
par le deuxième dispositif de communication,
les quatrièmes informations LL indiquant au
premier dispositif de communication un ou plusieurs de ce qui suit :

- le premier dispositif de communication est
autorisé à transmettre les deuxièmes informations LL pendant une transmission de
l'unité de données suivante transmise par
le troisième dispositif de communication ;

- le premier dispositif de communication peut utiliser les quatrièmes informations LL pour se synchroniser avec la transmission de l'unité de données suivante par le troisième dispositif de communication ;

- le type d'unité de données suivante transmise par le troisième dispositif de communication ; et

- une fenêtre temporelle et/ou un ensemble de sous-porteuses à utiliser par le premier dispositif de communication permettant de transmettre les deuxièmes informations LL ;

et/ou

ii) se synchroniser avec la transmission en cours d'une unité de données par le troisième dispositif de communication et/ou décoder le contenu des cinquièmes informations LL transmises par le troisième dispositif de communication, les cinquièmes informations LL indiquant au premier dispositif de communication un ou plusieurs de ce qui suit :

- le premier dispositif de communication est autorisé à transmettre les deuxièmes informations LL pendant la transmission en cours de l'unité de données transmise par le troisième dispositif de communication ;

- le type d'unité de données transmise par le troisième dispositif de communication dans la transmission en cours ; et

- une fenêtre temporelle et/ou un ensemble de sous-porteuses à utiliser par le premier dispositif de communication permettant de transmettre les deuxièmes informations LL ;

et/ou

iii) se synchroniser avec la transmission en cours de l'unité de données provenant du troisième dispositif de communication par un ou plusieurs de ce qui suit :

- la synchronisation avec une trame précédente contenant des quatrièmes informations LL transmises par le deuxième dispositif de communication, qui sont transmises un temps prédéterminé avant la transmission de l'unité de données en cours transmise par le troisième dispositif de communication ;

- la synchronisation avec le préambule de la transmission en cours de l'unité de données transmise par le troisième dispositif de communication contenant les cinquièmes informations LL ; et

- la synchronisation avec le préambule de la transmission en cours de l'unité de données transmise par le troisième dispositif de communication après qu'une trame précédente contenant les quatrièmes informations LL a été reçue du deuxième dispositif de communication.

6. Deuxième dispositif de communication configuré pour communiquer avec un premier dispositif de communication et un troisième dispositif de communication, le deuxième dispositif de communication comprenant une circuiterie configurée pour :

- transmettre une indication de faible latence, LL, qui indique au premier dispositif de communication que la transmission de deuxièmes informations LL par le premier dispositif de communication est autorisée ; et

- recevoir les deuxièmes informations LL provenant du premier dispositif de communication pendant et dans la largeur de bande d'une transmission en cours d'une unité de données du troisième dispositif de communication vers le deuxième dispositif de communication, dans lequel les deuxièmes informations LL indiquent au deuxième dispositif de communication que le premier dispositif de communication présente des données LL à transmettre vers le deuxième dispositif de communication.

7. Deuxième dispositif de communication selon la revendication 6,
dans lequel la circuiterie est configurée pour transmettre les troisièmes informations LL au premier dispositif de communication, indiquant au premier dispositif de communication si et quand le premier dispositif de communication est autorisé à transmettre les données LL vers le deuxième dispositif de communication, et/ou pour transmettre les troisièmes informations LL dans le cadre d'un accusé de réception ou d'une trame séparée.

8. Deuxième dispositif de communication selon la revendication 6 ou 7,
dans lequel la circuiterie est configurée pour transmettre un ou plusieurs parmi

- un rapport signal/brouillage cible au niveau du deuxième dispositif de communication,

- un seuil de brouillage qui ne doit pas être dépassé par la transmission des deuxièmes informations LL,

- des niveaux de puissance de transmission et/ou de réception du deuxième dispositif de communication,

- des informations de perte de chemin sur la perte de chemin entre le deuxième dispositif de communication et le troisième dispositif de communication et/ou entre le deuxième dispositif de communication et le premier dispositif de communication, et
- une marge de détection minimale permettant de détecter les deuxièmes informations LL par le deuxième dispositif de communication.

9. Deuxième dispositif de communication selon la revendication 6, 7 ou 8,
dans lequel la circuiterie est configurée pour détecter les deuxièmes informations LL par l'utilisation d'une connaissance concernant une séquence LL utilisée par le premier dispositif de communication permettant d'identifier le premier dispositif de communication et concernant le mappage de la séquence LL dans des sous-porteuses prédéterminées dans des symboles OFDM utilisés par le premier dispositif de communication permettant de transmettre les deuxièmes informations LL, en particulier par l'utilisation supplémentaire d'une opération d'annulation de l'auto-brouillage basée sur des rapports de vraisemblance de bits de l'unité de données reçue du troisième dispositif de communication et/ou par la détection de l'unité de données reçue du troisième dispositif de communication, la soustraction de l'unité de données détectée à partir du signal reçu et la détection des deuxièmes informations LL dans le signal restant.

10. Premier dispositif de communication configuré pour communiquer avec un deuxième dispositif de communication, le troisième dispositif de communication comprenant une circuiterie configurée pour :

   - recevoir une instruction du deuxième dispositif de communication pour transmettre une indication de faible latence, LL, qui indique à un premier dispositif de communication que la transmission de deuxièmes informations LL par le premier dispositif de communication est autorisée ; et
   - transmettre l'indication LL.

11. Troisième dispositif de communication selon la revendication 10,
dans lequel la circuiterie est configurée pour

   - recevoir une instruction du deuxième dispositif de communication pour transmettre les cinquièmes informations de faible latence, LL, les cinquièmes informations LL indiquant au premier dispositif de communication un ou plusieurs de ce qui suit :
   - le premier dispositif de communication est autorisé à transmettre des deuxièmes informations LL pendant la transmission en cours de l'unité de données transmise par le troisième dispositif de communication, les deuxièmes informations LL indiquant au deuxième dispositif de communication que le premier dispositif de communication présente des données LL à transmettre vers le deuxième dispositif de communication ;
   - le premier dispositif de communication peut utiliser les cinquièmes informations LL pour se synchroniser avec la transmission en cours de l'unité de données par le troisième dispositif de communication ;
   - le type d'unité de données transmise par le troisième dispositif de communication dans la transmission en cours ; et
   - une fenêtre temporelle et/ou un ensemble de sous-porteuses à utiliser par le premier dispositif de communication pour transmettre les deuxièmes informations LL ;
   - transmettre les cinquièmes informations LL ; et
   - transmettre une unité de données au deuxième dispositif de communication.

12. Premier procédé de communication d'un premier dispositif de communication configuré pour communiquer avec un deuxième dispositif de communication, le premier procédé de communication comprenant :

   - la réception d'une indication de faible latence (LL) provenant du deuxième et/ou du troisième dispositif de communication, qui indique au premier dispositif de communication que la transmission de deuxièmes informations LL par le premier dispositif de communication est autorisée ; et
   - la transmission des deuxièmes informations LL au deuxième dispositif de communication pendant et dans la largeur de bande d'une transmission en cours d'une unité de données du troisième dispositif de communication au deuxième dispositif de communication, dans lequel les deuxièmes informations LL indiquent au deuxième dispositif de communication que le premier dispositif de communication présente des données LL à transmettre vers le deuxième dispositif de communication.

13. Second procédé de communication d'un deuxième dispositif de communication configuré pour communiquer avec un premier dispositif de communication, le second procédé de communication comprenant :

   - la transmission d'une indication de faible latence, LL, qui indique au premier dispositif de communication que la transmission des deuxièmes informations LL par le premier dispositif de communication est autorisée pendant et dans la largeur de bande d'une transmission en cours d'une unité de données du troisième dispositif de communication vers le deuxième dispositif de communication ; et

- la réception des deuxièmes informations LL du premier dispositif de communication pendant et dans la largeur de bande d'une transmission en cours d'une unité de données du troisième dispositif de communication vers le deuxième dispositif de communication, dans lequel les deuxièmes informations LL indiquent au deuxième dispositif de communication que le premier dispositif de communication présente des données LL à transmettre vers le deuxième dispositif de communication.

14. Premier procédé de communication d'un premier dispositif de communication configuré pour communiquer avec un deuxième dispositif de communication, le premier procédé de communication comprenant :

- la réception d'une instruction provenant du deuxième dispositif de communication pour transmettre une indication de faible latence, LL, qui indique à un premier dispositif de communication que la transmission des deuxièmes informations LL par le premier dispositif de communication est autorisée ; et
- la transmission de l'indication LL.

15. Programme informatique comprenant un code de programme qui, lorsqu'il est exécuté sur un ordinateur, amène l'ordinateur à réaliser l'un quelconque du premier procédé de communication selon la revendication 12, du deuxième procédé de communication selon la revendication 13 ou du troisième procédé de communication selon la revendication 14.

**Fig. 1**

LL_IF boundary

TXOP

22

TX_STA (non-AP)  ⋯  | Preamble | Data |

RX_STA (AP)

13
A
20
BAck

LL_STA (non-AP)

Processing time

LL_IF

Estimated CA time

LL data
21

LL arrival

11

12

Reduced channel access latency

**Fig. 2**

EP 4 449 809 B1

**Fig. 3**

Fig. 4

$Pw_{LL}$

$Pw_{TX}$

LL_STA

TX_STA

$PL_{LL}$

$PL_{TX}$

RX_STA

## Fig. 5

**Fig. 6**

**Fig. 7**

50

Baseband samples → OFDM Demodulator (51) → Complex samples in Freq. domain → Channel equalizer (52) → Decoder (53) → bit stream

log-likelihood ratios per bit → Modulator (QPSK,QAM,...) (57) → SIC (54) → Complex samples in Time-Freq. after SIC

Complex samples in Time-Freq. → Buffer (56)

LL_IF Correlator (55) → Energy detector (58) → LL_IF detection indication (SIC request) → LL_IF detection indication

Fig. 8

EP 4 449 809 B1

Fig. 9

| LL_IF sequence generator | → | Cyclic repetition | LL_IF sequence → | LL_IF tone Mapper | → | OFDM modulator | → | (coarse) Synchronization and transmission |

71                72                        73                74              75

**Fig. 10**

Hadamard matrix 4x4

Phase shifts per section

$$\begin{bmatrix} 1 & -1 & e^{\frac{j\pi}{2}} & e^{-\frac{j\pi}{2}} \end{bmatrix} \bigotimes \begin{bmatrix} 1 & 1 & 1 & 1 \\ 1 & -1 & 1 & -1 \\ 1 & 1 & -1 & -1 \\ 1 & -1 & -1 & 1 \end{bmatrix} = $$

$$\begin{bmatrix} 1 & 1 & 1 & 1 & -1 & -1 & -1 & -1 & e^{\frac{j\pi}{2}} & e^{\frac{j\pi}{2}} & e^{\frac{j\pi}{2}} & e^{\frac{j\pi}{2}} & e^{-\frac{j\pi}{2}} & e^{-\frac{j\pi}{2}} & e^{-\frac{j\pi}{2}} & e^{-\frac{j\pi}{2}} \\ 1 & -1 & 1 & -1 & -1 & 1 & -1 & 1 & e^{\frac{j\pi}{2}} & -e^{\frac{j\pi}{2}} & e^{\frac{j\pi}{2}} & -e^{\frac{j\pi}{2}} & e^{\frac{j\pi}{2}} & -e^{-\frac{j\pi}{2}} & e^{\frac{j\pi}{2}} & -e^{\frac{j\pi}{2}} \\ 1 & 1 & -1 & -1 & -1 & -1 & 1 & 1 & e^{\frac{j\pi}{2}} & e^{\frac{j\pi}{2}} & -e^{\frac{j\pi}{2}} & -e^{\frac{j\pi}{2}} & e^{\frac{j\pi}{2}} & e^{\frac{j\pi}{2}} & -e^{\frac{j\pi}{2}} & -e^{\frac{j\pi}{2}} \\ 1 & -1 & -1 & 1 & -1 & 1 & 1 & -1 & e^{\frac{j\pi}{2}} & -e^{\frac{j\pi}{2}} & -e^{\frac{j\pi}{2}} & e^{\frac{j\pi}{2}} & e^{\frac{j\pi}{2}} & -e^{\frac{j\pi}{2}} & -e^{\frac{j\pi}{2}} & e^{\frac{j\pi}{2}} \end{bmatrix}$$

$\bigotimes$ : Kronecker product

LL_IF sequence 3

LL_IF sequence 2

LL_IF sequence 1

**Fig. 11**

Fig. 12

**Fig. 13**

Fig. 14

**Fig. 15**

Fig. 16

Fig. 17

EP 4 449 809 B1

200

201 transmit LL indication

202 receive second LL information

**Fig. 19**

300

301 receive instruction

302 transmit LL indication

**Fig. 20**

100

101 receive LL indication

102 transmit second LL information

**Fig. 18**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2021155954 A1

**Non-patent literature cited in the description**

• Performance evaluation of Real Time Communication over Wi-Fi. **EVGENY KHOROV**. IEEE DRAFT; 11-18-1947-04-0RTA-PERFORMANCE-EVALUATION OF-REAL-TIME-COMMUNICATION-OVER-WI-FI. IEEE-SA MENTOR, March 2019, vol. 802, 1-11